# EUROPÄISCHE PATENTSCHRIFT

(11) **EP 1 402 952 B1**
(45) Veröffentlichungstag und Bekanntmachung des Hinweises auf die Patenterteilung: **23.01.2008**
(21) Anmeldenummer: 03020881.3
(22) Anmeldetag: 15.09.2003
(51) Int. Cl.: B01L 3/02, A61C 5/06, B65D 81/32

(54) **Kartusche mit Verbindung für einen Pump-Antrieb und Handhabungs-System**
Cartridge with connection for drive means and handling system
Cartouche avec moyen d' entrainement et système de manipulation

(30) Priorität: 26.09.2002 DE 10244960
(43) Veröffentlichungstag der Anmeldung: 31.03.2004
(73) Patentinhaber: SIEMENS AKTIENGESELLSCHAFT, 80333 München (DE)
(72) Erfinder: Krüger, Andreas, 91088 Bubenreuth (DE)

(56) Entgegenhaltungen:
- EP-A- 0 600 580
- DD-A- 299 156
- DE-A- 19 652 272

## Beschreibung

Die Erfindung betrifft eine Kartusche für die Handhabung und den Transport eines flüssigen oder gasförmigen Stoffs sowie ein System zur Handhabung eines flüssigen oder gasförmigen Stoffs unter Verwendung einer solchen Kartusche. Die Erfindung betrifft insbesondere eine Kartusche zur Handhabung eines medizinisch zu untersuchenden flüssigen oder gasförmigen Stoffs sowie eine Analysevorrichtung zur Untersuchung medizinisch relevanter Eigenschaften eines flüssigen oder gasförmigen Stoffs unter Verwendung einer solchen Kartusche.

In der medizinischen Diagnostik gibt es eine Vielzahl von Untersuchungen, die an Flüssigkeiten oder Gasen durchgeführt werden, z.B. an Blut, Urin, Speichel, Magensäften oder Atemluft. Die Untersuchungen können der Analyse verschiedenster Parameter chemischer, mikrobiologischer oder physikalischer Eigenschaften dienen. Neben der Ermittlung von Größen wie dem pH-Wert, dem Gehalt an bestimmten chemischen Elementen oder Verbindungen oder der Bestimmung des Bakterien-Gehalts spielen mikrobiologische Analyseverfahren eine immer größere Rolle. Diese haben häufig den elektrochemischen Nachweis von Nukleotidsequenzen zum Ziel, die auf genetische Fehlentwicklungen oder die Existenz krankheitserregender Bakterien oder Viren hinweisen können. Der Nachweis von Nukleotidsequenzen basiert normalerweise auf einem zweistufigen Verfahren, in dessen erster Stufe in der Flüssigkeit vorhandene DNA-Bruchstücke vielfach reproduziert werden, um die Nachweiswahrscheinlichkeit für den eigentlichen Nachweis in der zweiten Stufe des Nachweisverfahrens zu erhöhen. Da dabei auch genetische Verunreinigungen vervielfacht werden, stellen diese Verfahren besonders hohe Anforderungen an die Sauberkeit der Verfahrens-Apparaturen.

Auch in chemischen und biochemischen Analyseverfahren spielt die Analyse von Flüssigkeiten oder Gasen eine große Rolle. Solche Verfahren können in chemischen Labors, in der Industrie, im Umweltschutz oder der Nahrungsmittelherstellung von großer Bedeutung sein. Je nach Anwendungsgebiet können dort besondere Anforderungen an die Reinheit von Behältnissen für die Durchführung der Analyse-Verfahren gestellt werden.

Neben der Handhabung zu Untersuchungszwecken, wo unter Handhabung in erster Linie Dosierung zu verstehen ist, kann die Handhabung von Flüssigkeiten oder Gasen auch im Hinblick auf industrielle oder lebensmittelindustrielle Anwendungen erforderlich sein, wo häufig eher Lagerung und Transport gemeint sind. Insbesondere in großindustriellen Anwendungs-Maßstäben können immense Anzahlen von Handhabungsvorgängen für einzelne Flüssigkeits- oder Gas-Mengen auftreten.

Während die Handhabung von Flüssigkeiten und Gasen unter alltäglichen Bedingungen kein besonderes Problem darstellt, verursachen hohe Anzahlen an Handhabungs-Vorgängen oder hohe Anforderungen an einen besonderen Grad an Reinheit bislang einen hohen finanziellen und handhabungstechnischen Aufwand. Die penible Reinigung der Behältnisse verursacht eine Vielzahl einzelner Reinigungsschritte mit entsprechen hohem Arbeits-Aufwand. Die Handhabung und Dosierung von Flüssigkeiten oder Gasen bei großen Anzahlen von Handhabungs-Vorgängen und hohen Anzahlen einzelner Mengen-Einheiten ist nur mit hohem gerätetechnischem Automatisierungs-Aufwand erreichbar.

Kommen hohe Anforderungen an Reinheitsgrad und Handhabungs-Stückzahlen zusammen, ist bislang wegen des hohen Preises der aufwändigen Geräte zur Handhabung und zur Reinigung die Einwegnutzung der Gerätschaften unrentabel und zusätzlicher personeller Aufwand ist unvermeidbar. Aber auch wenn alleine ausreichend große Anzahlen Handhabungs-Vorgängen im Spiel sind, entsteht bereits ein unvertretbar hoher Handhabungs-Aufwand. Zum Beispiel kommt es bei der Vielzahl an Handhabungs-Schritten, die in einem zentralen medizinischen oder chemischen Analyse-Labor für eine Vielzahl von Kleinkunden serienmäßig durchgeführt werden, oder in einer chemischen oder lebensmittelindustriellen Fertigung großen Maßstabs, bereits durch die Einsparung einzelner Handhabungs-Schritte zur Ersparnis von Arbeits-Aufwand und -Zeit in bedeutendem Umfang.

Die große Anzahl von Handhabungsvorgängen mit diskreten Flüssigkeits- oder Gas-Mengen kann mit einer großen Anzahl von Stoff-Behältern, nachfolgend auch Kartusche genannt, durchgeführt werden. Nachteilig dabei ist aber, dass die Kartuschen in ebenso großer Anzahl einzeln gehandhabt werden müssen und z.B. an zu dieser Verwendung vorgesehene Geräte angeschlossen werden müssen. Besondere Anforderungen an Logistik oder an die Reinheit können mit einer großen Anzahl von Kartuschen erfüllt werden, wenn diese ausreichend günstig sind, um wirtschaftlich als Einweg-Produkte genutzt werden zu können. Hier stellt sich zusätzlich das Problem, dass trotz günstiger Kosten der Handhabungs-Aufwand klein gehalten werden soll.

Aufgabe der Erfindung ist es, die Handhabung von flüssigen oder gasförmigen Stoffen in Kartuschen zu ermöglichen, die zum einen nur geringen Handhabungsaufwand erfordern, zum anderen aber ausreichend günstig herstellbar sind, um auch als Einweg-Produkte wirtschaftlich nutzbar zu sein.

Die Erfindung löst diese Aufgabe durch eine Vorrichtung gemäß den Merkmalen von Anspruch 1 bzw. durch ein System gemäß den Merkmalen der weiteren unabhängigen Ansprüche.

Die Erfindung beruht auf dem Gedanken, zur Handhabung von Flüssigkeiten und Gasen eine Kartusche zu verwenden, die ein integrales, von außerhalb der Kartusche anzutreibendes Pumpsystem besitzen. Unter Kartusche soll dabei ein den jeweiligen Anforderungen angepasster Stoffbehälter verstanden werden, der dick- oder dünnwandig sein kann und zusätzliche Merkmale wie integrierte Heiz- oder Kühlsysteme oder sonstiges aufweisen kann. Das Pumpsystem, worunter z.B. ein PumpKolben verstanden werden kann, kann selbsttätig mit dem Pump-Antrieb eines Handhabungs-Systems durch eine formschlüssige Verbindung gekoppelt und entkoppelt werden. Dadurch ist es nicht erforderlich, zusätzliche Pumpsysteme wie z.B. Spritzen oder Kolbenpumpen zur Handhabung zu verwenden. Dadurch kann bei der Handhabung zusätzlicher Aufwand für das Ankoppeln und Entkoppeln der Kartusche an ein Handhabungs-System vermieden werden.

Die Erfindung beruht weiter auf dem Gedanken, dass neben der Kartusche auch das Pumpsystem auf preisgünstig herstellbaren Komponenten wie Kunststoff-Formteilen basiert. Dadurch kann die Kartusche preisgünstig hergestellt und in großer Stückzahl zur Verfügung gestellt werden. Die wirtschaftliche Herstellbarkeit großer Stückzahlen ist von besonderem Vorteil bei der Verwendung der Kartusche für zentrale, serienmäßige Labor-Untersuchung von großen Anzahlen von Proben, die räumlich verteilt vor Ort abgenommen werden müssen. Die preisgünstige Herstellbarkeit der Kartusche in großen Stückzahlen macht sie zudem als Einwegprodukt wirtschaftlich nutzbar. Dadurch kann zum einen der logistische Aufwand bei häufiger, räumlich verteilter Nutzung verringert werden. Zum anderen kann im Hinblick auf Analyse-Verfahren, die besondere Anforderungen an die Reinheit der Proben stellen, die aufwändige Reinigung der Kartuschen entfallen. Statt dessen werden die bei der Herstellung noch nicht verunreinigten Kartuschen je nach Anforderungen sterilisiert bzw. gereinigt und abschließend dicht verpackt, z.B. in einem Blister, wie er für Medizin-Produkte üblich ist. Die wesentlich aufwändigere Reinigung bereits benutzter, also verunreinigter Kartuschen wird dann ganz verzichtbar.

In einer vorteilhaften Variante der Erfindung wird der Herstellungsaufwand dadurch minimiert, dass die automatisch herstellbare Verbindung zwischen integralem Pumpsystem der Kartusche und Pump-Antrieb des Analyse- oder Dosier-Geräts unter Verzicht auf aufwändige, feinmechanisch arbeitende Teile und lediglich auf Basis eines elastischen Formteils realisiert wird. Das elastische Formteil ist so gestaltet, dass es Rastoder Backenelemente aufweist, die bei Vorschub des integralen Pumpsystems durch den externen Pump-Antrieb mit diesem eine in Bezug auf Längsbewegungen formschlüssige Verbindung eingeht. Die formschlüssige Verbindung ist so beschaffen, dass das integrale Pumpsystem durch den externen Pump-Antrieb auch wieder zurückgezogen werden kann, wobei sich die formschlüssige Verbindung dann löst, wenn das integrale Pumpsystem beim Zurückziehen wieder seine Ausgangsstellung erreicht hat.

Ein weiterer Vorteil ergibt sich daraus, dass auch das integrierte Pumpsystem als Einweg-System ausgeführt ist. Es kann gegebenenfalls denselben Reinigungsschritten wie die gesamte Kartusche unterzogen werden und erfüllt daher die gleichen Anforderungen an die Reinheit. Bei Einwegnutzung muss es ebenfalls nicht aufwändig zur Wiederverwendung gesäubert werden. Darüber hinaus profitiert die Reinheit der zu handhabenden Flüssigkeiten oder Gase auch von der Integration des Pumpsystems, dass der Transfer über und der Kontakt mit zusätzlichen Pumpsystemen, z.B. Spritzen, vermieden wird.

Ebenfalls ein Grundgedanke der Erfindung ist es, ein System anzugeben, dass die Handhabung von flüssigen oder gasförmigen Stoffen mittels einer preisgünstig herstellbaren Kartusche ermöglicht, die mit dem System durch eine formschlüssige Verbindung selbsttätig gekoppelt und auch wieder entkoppelt werden kann. Durch die selbsttätige Koppelung kann die Anzahl einzelner Handhabungsschritte reduziert werden. Die preisgünstige Herstellbarkeit der Kartusche ermöglicht die wirtschaftliche Anwendung in großen Stückzahlen und als Einwegprodukt.

Weitere vorteilhafte Varianten der Erfindung sind Gegenstand der unabhängigen Patentansprüche.

Nachfolgend werden Ausführungsbeispiele der Erfindung anhand von Figuren näher beschrieben. Diese zeigen im einzelnen:
- FIG 1: Kartusche und Analyse- oder Dosiergerät mit nichtverbundenem Pump-Antrieb,
- FIG 2: Kartusche und Dosier- oder Analysegerät mit verbundenem Pump-Antrieb,
- FIG 3: vergrößerte Darstellung einer besonderen Ausführung der Verbindungs-Komponenten,
- FIG 4: vergrößerte Darstellung einer weiteren, besonderen Ausführung der Verbindungs-Komponenten.

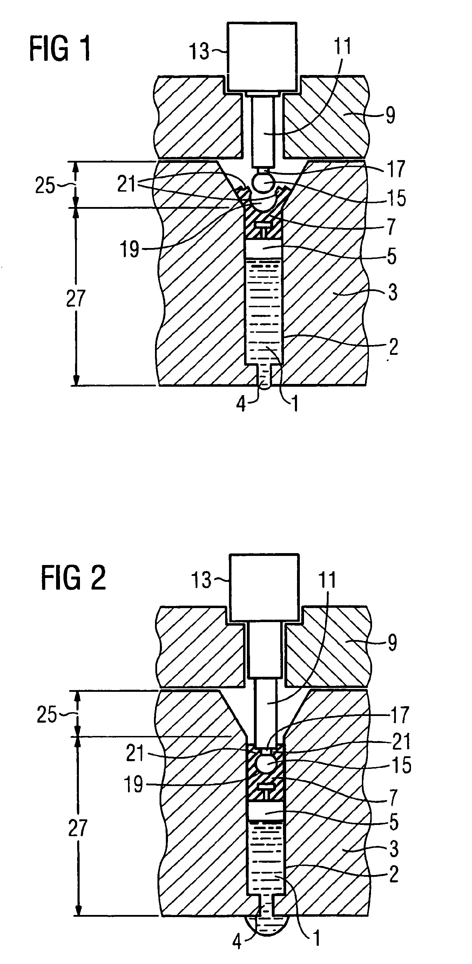

**Figur 1** zeigt ein System gemäß der Erfindung mit einer Kartusche **3** und einem Dosier- oder Analysegerät **9**. Die Kartusche **3** kann je nach der zu handhabenden Flüssigkeit oder dem zu handhabenden Gas aus Kunststoff, Metall oder einem sonstigen, geeigneten Werkstoff bestehen. Die Kartusche **3** weist einen als Zylinder geformten Tank **2** auf, dessen Querschnitt grundsätzlich beliebig geformt sein kann, der der einfacheren Herstellung halber aber vorzugsweise kreisrund ist. In dem Tank **2** befindet sich in Figur **1** eine Flüssigkeit **1**, die über eine an der Stirnseite des Tanks **2** liegende Öffnung **4** eingepumpt wird. In dem Tank **2** ist ein Kolben **5** angeordnet, der vor- und zurückschiebbar ist, um die Flüssigkeit **1** ein- oder auszupumpen. Damit der Kolben **5** mit der Innenwand des Tanks **2** eine dichte Verbindung eingehen kann, weisen die beiderseitigen Oberflächen eine entsprechende Oberflächengüte auf. Außerdem kann wenigstens einer der beiden Dichtungspartner aus elastischem Material gefertigt sein, z.B. kann der Kolben **5** aus elastischem Kunststoff hergestellt sein. Je nach Anforderung an die Dichtheit können auf dem Kolben **5** auch Dichtringe angeordnet sein, was in Figur **1** aber nicht dargestellt ist.

Der Kolben **5** weist ein Verbindungs-Element **7** auf, das in Figur **1** als gesondertes, mit dem Kolben **5** mechanisch verbundenes Bauelement dargestellt ist. Es ist jedoch auch möglich, Kolben **5** und Verbindungs-Element **7** integral, d.h. als ein einziges Bauelement, zu fertigen, was der Verringerung des Herstellungsaufwands dienen kann. Andererseits kann sich dies verbieten, falls die mit dem Kolben **5** in Kontakt tretende Flüssigkeit **1** Anforderungen an das Material des Kolbens **5** stellt, die mit den mechanischen Anforderungen des Verbindungs-Elements **7** nicht vereinbar sind. Zum Beispiel könnte das Verbindungs-Element **7** aus elastischem Kunststoff gefertigt werden, die Flüssigkeit **1** jedoch in Bezug auf Kunststoff aggressive Eigenschaften aufweisen. In diesem Fall dürfte der Kolben **5** nicht aus Kunststoff gefertigt werden, sondern müsste z.B. aus Metall bestehen.

Der Kolben **5** kann von dem Dosier- oder Analyse-Pump-Gerät **9** durch eine Kolben-Stange **11** erfasst werden, die von einem Antrieb **13** angetrieben wird. Wird die Kolben-Stange **11** durch den Antrieb **13** vorgeschoben, so kann sie den Kolben **5** über das Verbindungs-Element **7** tiefer in den Tank **2** hineinschieben. Dadurch wird Flüssigkeit **1** durch die Öffnung **4** ausgepumpt. Das Dosier- oder Analyse-Pump-Gerät **9** steuert den Antrieb **13** und kann so die Menge der Flüssigkeit **1**, die durch Öffnung **4** austritt, exakt dosieren. Aufgrund des linearen Vorschubs der Kolben-Stange **11** und des gleichbleibenden Querschnitts des Tanks **2** hängt das dabei austretende Volumen direkt vom Vorschub der Kolben-Stange ab, wobei unter Umständen die Elastizität des Kolbens **5** oder des Verbindungs-Elements **7** zu berücksichtigen ist.

Die Erfindung ermöglicht es darüber hinaus, den Kolben **5** durch Zurückziehen der Kolben-Stange **11** zurückzuziehen und dadurch Flüssigkeit **1** durch Öffnung **4** in den Tank **2** einzupumpen. Zu diesem Zweck kann die Öffnung **4** entweder als Düse zur Aufnahme von Flüssigkeit **1** ausgebildet sein, mit der einzupumpenden Flüssigkeit **1** in direktem Kontakt stehen, oder es kann eine Düse bzw. Nadel auf die Öffnung **4** aufsetzbar sein. Falls die Öffnung **4** nicht mit Flüssigkeit in direktem Kontakt steht und der Kolben **5** zurückgezogen wird, wird anstelle von Flüssigkeit **1** Umgebungs-Luft in den Tank **2** eingepumpt.

Damit der Kolben **5** durch die Kolben-Stange **11** zurückgezogen werden kann, sind das Verbindungs-Element **7** und das Ende der Kolben-Stange **11** so ausgebildet, dass zwischen ihnen eine in Bezug auf gegenseitige Längsbewegungen formschlüssige Verbindung hergestellt werden kann. Um diese formschlüssige Verbindung herstellen zu können, weist das Verbindungs-Element **7** eine Verbindungs-Buchse **19** auf, die durch eine Vertiefung in dem dem Kolben **5** gegenüberliegenden Ende des Verbindungs-Elements **7** gebildet wird. Die Wand des Verbindungs-Elements **7** weist im Bereich dieser Vertiefung Rast-Elemente **21** auf, die in Figur **1** als halbrunde Backen ausgeführt sind. Die Kolben-Stange **11** dagegen weist an ihrem dem Verbindungs-Element **7** zugewandten Ende einen Verbindungs-Stempel **15** auf, der durch eine Verjüngung **17** abgeschlossen wird.

Verbindungs-Buchse **19** und Verbindungs-Stempel **15** sind so geformt, dass sie beim Vorschieben der Kolben-Stange **11** in gegenseitigen Eingriff und treten können, um die Verbindung selbsttätig zu schließen. Zu diesem Zweck weitet sich der Querschnitt des Tanks **2** in dem Abschnitt, in dem in Figur **1** das Verbindungs-Element **7** liegt, zum Ende hin auf. Diese Aufweitung ermöglicht es den Rast-Elementen **21**, infolge der Elastizität des Verbindungs-Elements **7** vom Verbindungs-Stempel **15** weg nach außen auszuweichen. Daher ist in Figur **1** die Verbindung zwischen Kolben-Stange **11** und Kolben **5** nicht geschlossen.

Kartusche **3** und Kolben **5** sowie Verbindungs-Element **7** weisen dabei einen verhältnismäßig einfachen Aufbau auf, der eine Fertigung und Montage als Einwegprodukt in wirtschaftlicher Weise möglich macht.

In **Figur 2** ist das gleiche System wie in der vorhergehenden Figur **1** dargestellt, hier jedoch mit geschlossener Verbindung zwischen Kolben **5** und Kolben-Stange **11**. Die Kolben-Stange **11** wurde durch Antrieb **13** weit genug vorgeschoben, um in die Verbindungs-Buchse **19** des Verbindungs-Elements **7** einzugreifen. Dabei wurde der Kolben **5** über das Verbindungs-Element **7** so weit vorgeschoben, dass die Rast-Elemente **21** in Figur **2** nicht mehr im aufgeweiteten Abschnitt des Tanks **2** liegen, sondern bis in den zylindrischen Teil vorgeschoben sind. Beim Vorschieben der Rast-Elemente **21** durch den sich verjüngenden Abschnitt des Tanks **2** werden diese zunehmend in Richtung des Verbindungs-Stempels **15** gedrückt, bis sie im zylindrischen Abschnitt des Tanks **2** völlig angedrückt werden. Dabei werden die Rast-Elemente **21** in die Verjüngung **17** der Kolben-Stange **11** hineingedrückt und der Verbindungs-Stempel **15** füllt die Verbindungs-Buchse **19** komplett aus. Zu diesem Zweck entspricht die Tiefe der Verbindungs-Buchse **19** und die Anordnung der Rast-Elemente **21** in der Buchse genau der Länge des Verbindungs-Stempels **15** und der spiegelbildlich verkehrten Anordnung der Verjüngung **17.**

In Figur **2** ist erkennbar, dass die Rast-Elemente **21** so in die Verjüngung **17** eingreifen, dass eine in Bezug auf Längsbewegungen formschlüssige Verbindung hergestellt wird. Das heißt, dass der Kolben **5** durch Vorschub der Kolben-Stange **11** exakt vor- und zurückbewegt werden kann. Dadurch ist sowohl das Einpumpen als auch das Auszupumpen von Flüssigkeit **1** durch die Öffnung **4** möglich.

Die formschlüssige Verbindung zwischen Verbindungs-Stempel **15** und Verbindungs-Buchse **19** wird durch die besondere Form des Tanks **2** selbsttätig hergestellt. Zu diesem Zweck muss das Verbindungs-Element **7** aus einem elastischen Material so hergestellt sein, dass die Rast-Elemente **21** ohne Einwirken einer äußeren Kraft vom Verbindungs-Stempel **15** weg nach außen tendieren. Durch diese elastische Kraft nehmen sie die in Figur **1** dargestellte Position, in der die formschlüssige Verbindung nicht hergestellt ist, selbsttätig ein. Dadurch löst sich beim Zurückziehen der Kolben-Stange **11** die Verbindung zum Verbindungs-Element **7** wieder selbsttätig, sobald die Rast-Elemente **21** aus dem zylindrischen Abschnitt des Tanks **2** in den sich aufweitenden Abschnitt gelangen. Die formschlüssige Verbindung ist also selbsttätig schließbar und selbsttätig wieder lösbar, wobei sie nur der Steuerung der Kolben-Stange **11** durch das Dosier- oder Auswerte-Pump-Gerät **9** unterliegt.

Die automatische Herstellung der Verbindung zwischen Kolbenstange **11** und Kolben **5** ermöglicht es insbesondere, die Kartusche **3** unaufwändig mit dem Dosier- oder Auswerte-Pump-Gerät **9** zu verbinden. Sie kann ohne weiteres durch wenige, ungeschulte Handgriffe angebracht werden, da die eigentliche funktionale Verbindung zur Steuerung des Pumpvorgangs automatisch hergestellt wird. Sie unterliegt demnach nicht der Präzision, mit der die Kartusche **3** manuell am Dosier- oder Auswerte-Pump-Gerät **9** angebracht wird. Dies erhöht einerseits die Präzision bei der Dosierung geringer Mengen von Flüssigkeit **1** durch das Dosier- oder Auswerte-Pump-Gerät **9** und ermöglicht andererseits die Installation und Deinstallation der Kartusche **3** mit geringem Arbeitsaufwand insbesondere bei der häufigen Handhabung großer Stückzahlen.

Das beschriebene System ist damit in der Lage, zentral, insbesondere stationär durchzuführende Analysen unter Verwendung von Einwegkartuschen in großen Stückzahlen durchzuführen. Weiter können die Kartuschen **3** als Einwegkartuschen im gewünschten Reinheits-Grad hergestellt werden, um eine Anwendung auch in Reinheits-kritischen Analysen, wie sie in der Mikrobiologie, Chemie oder Medizin durchgeführt werden, zu ermöglichen. Es sind auch große Anzahlen diskreter Stoffmengen in der Lebensmittel-Herstellung, der chemischen Industrie oder anderen industriellen Anwendungen möglich.

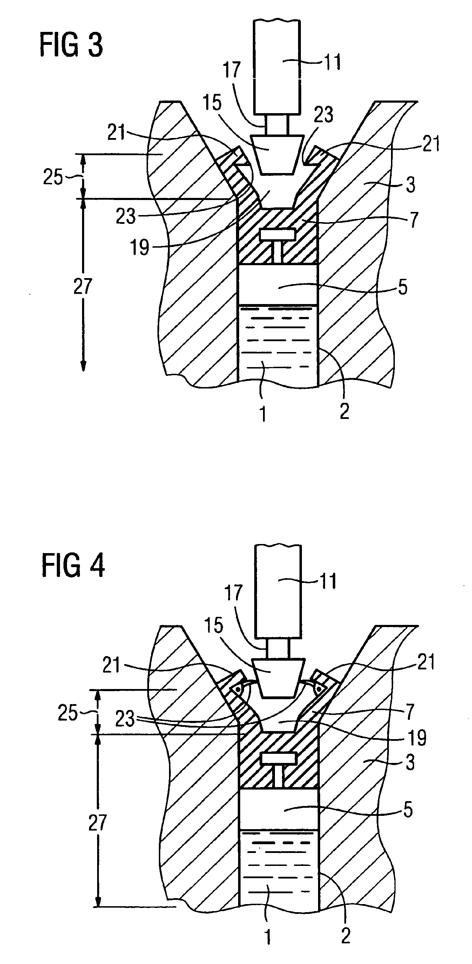

In **Figur 3** sind das Verbindungs-Element **7** und der Verbindungs-Stempel **15** in einer anderen Ausführung vergrößert dargestellt. Insbesondere bei Verwendung elastischer Materialien für die Herstellung des Verbindungs-Elements **7** oder bei Verwendung von Folien-Gelenken für die Ausformung der Verbindungs-Buchse **19** kann das Problem auftreten, dass der Kolben **5** durch die Kolben-Stange **11** nicht ausreichend weit zurückgezogen werden kann. Dies rührt daher, dass die Rast-Elemente **21** beim Zurückziehen des Verbindungs-Stempels **15** elastisch nachgeben und in die Länge gezogen werden. Dadurch werden die Rast-Elemente beim Zurückziehen des Verbindungs-Stempel **15** in einen stärker aufgeweiteten Abschnitt des Tanks **2** gezogen, dann freigeben, verkürzen sich dann aber elastisch und wandern in einen stärker verjüngten Abschnitt zurück. Wird der Verbindungs-Stempel **15** anschließend erneut vorgeschoben, trifft er auf die Rast-Elemente **21** in dem stärker verjüngten Abschnitt des Tanks **2**; die Rast-Elemente **21** stehen dann zu eng beieinander und der Verbindungs-Stempel **15** kann nicht erneut in die Verbindungs-Buche **19** eingeschoben werden. Das hätte zur Folge, dass keine formschlüssige Verbindung zwischen Kolben-Stange **11** und Kolben **5** hergestellt wird und der Kolben **5** nach weiterem Vorschub anschließend nicht mehr zurückgezogen werden könnte.

Um dies zu vermeiden weisen die Rast-Elemente **21** in Figur **3** eine Form auf, die in Rückzieh-Richtung weniger leicht elastisch deformierbar sind als in Vorschub-Richtung. Idealerweise sind sie in Rückzieh-Richtung gar nicht elastisch sondern verbleiben starr in ihrer Position. Dadurch kann der Verbindungs-Stempel **15** leichter in die Verbindungs-Buchse **19** hineingeschoben als herausgezogen werden. Um dies zu bewerkstelligen sind die Rast-Elemente **21** als sägezahnartige Zacken dargestellt, die sich beim Zurückziehen der Kolben-Stange **11** in der Verjüngung **7** sozusagen festkrallen, während sie über ihre flache Seite beim Vorschub der Kolben-Stange **11** leicht zur Seite gedrückt werden können. Um das Einrasten der Rast-Elemente **21** in die Verjüngung **7** in Rückzieh-Richtung zu unterstützen, weist der Verbindungs-Stempel **15** eine flache Rückseite auf, auf der die Rast-Elemente **21** aufliegen, ohne seitlich abzugleiten. Insofern spielen Verjüngung **7** bzw. Verbindungs-Stempel **15** und Rast-Elemente **21** wie ein Zahnrastung zusammen.

In **Figur 4** ist eine weitere Variante des Verbindungs-Elements **7** in vergrößerter Darstellung gezeigt. Die in Figur **4** dargestellte Variante verfolgt das gleiche Ziel wie die in Figur **3** dargestellte Variante, nämlich das verfrühte Lösen der Verbindung zwischen Verbindungs-Stempel **15** und Verbindungs-Element **7** in Rückzieh-Richtung zu verhindern. In Ergänzung zu den elastischen Rast-Elementen **21** sind hier zusätzlich mechanische Rasten **23** vorgesehen. Diese sind so befestigt, dass sie in Vorschubrichtung der Kolben-Stange **11** zur Seite geklappt werden können, in der entgegengesetzten Richtung jedoch durch Anschläge am Wegklappen gehindert werden. Dadurch kann der Verbindungs-Stempel **15** beim Vorschub in die Verbindungs-Buchse **19** die Rasten **23** zur Seite drücken, ohne dass dabei eine Vorschubskraft auf den Kolben **5** ausgeübt würde. Die Rasten 23 sind derart angebracht, dass sie in die Verjüngung **7** eingreifen, sobald der Verbindungs-Stempel **15** vollständig in die Verbindungs-Buchse **19** eingeschoben ist. Zu diesem Zweck müssen die Rasten **23** durch Federkraft oder eine elastische Aufhängung in ihre in Figur **4** dargestellte Ausgangsposition zurückgedrückt werden.

Die Rasten **23** gewährleisten eine sichere formschlüssige Verbindung zwischen dem Verbindungs-Element **7** und der Kolben-Stange **11**, die sich beim Zurückziehen nicht frühzeitig lösen kann, da die Rasten **23** in Rückzieh-Richtung nicht wegklappen können. Sie sind nicht aus elastischem Material, sondern auf Grundlage fester Materialien gefertigt, z.B. aus Hart-Kunststoff oder Metall. Im Gegensatz dazu besteht das Verbindungs-Element **7** aus elastischem Material, um die Rast-Elemente **21** elastisch in ihre Ausgangsposition zurücktreiben zu können, oder weist dazu einen entsprechend vorgespannten Feder-Mechanismus auf, was in der Figur aber nicht näher dargestellt ist.

In einer weiteren, nicht dargestellten Variante des Verbindungs-Elements **7** ist dieses nicht aus elastischem Material gefertigt, sondern ebenfalls aus einem festen Material wie Hart-Kunststoff oder Metall. In dieser Variante muss das automatische Herstellen der Verbindung zwischen Kolben **5** und Kolben-Stange **11** durch eine erweiterte Funktionalität der Rasten **23** gewährleistet werden. Während nämlich in der vorhergehend beschriebenen Variante durch die Aufweitung des Querschnitts des Tanks **2** die Rast-Elemente **21** und damit die Rasten **23** ausreichend weit vom Verbindungs-Stempel 15 weggedrückt werden können, um die Verbindung beim Zurückziehen zu lösen, geht diese Möglichkeit bei Verwendung eines nicht elastischen Verbindungs-Elements **7** verloren. Daher ist es auch nicht nötig, den Endbereich des Tanks **2** mit einem sich kontinuierlich aufweitenden Querschnitt zu gestalten. Statt dessen ist das Verbindungs-Element **7** ebenso wie der Kolben **5** zylindrisch, d.h. mit über seine Länge gleichbleibendem Durchmesser, geformt.

Um die erforderliche Funktionalität der Rasten **23** zu gewährleisten, weisen diese in der nicht dargestellten Variante einen Riegel auf, der ihre Bewegung in der Richtung, in der sie den Verbindungs-Stempel **15** freigegeben, blockiert. In der anderen Richtung ist ihre Bewegung nicht eingeschränkt, so dass der Verbindungs-Stempel **15** jederzeit ungehindert in die Verbindungs-Buchse **19** eingeschoben werden kann. Der Riegel, der die Bewegung der Rasten **23** blockiert, kann beispielsweise als Zahnraste ausgeführt sein, die beim Zurückziehen des Verbindungs-Elements **7** in einem bestimmten Längsabschnitt des Tanks **2** gelöst wird, indem ein Entriegelungsstift auf der Innenwand des Tanks **2** die Zahnraste freigibt. Obwohl eine derartige Variante mit mechanisch beweglichen Rasten **23** einen bedeutend größeren Herstellungsaufwand mit sich bringen würde, kann dadurch eine zuverlässigere Verbindung und eine größere Präzision bei der Dosierung von in den Tank **2** einzupumpender Flüssigkeit erreicht werden.

Unabhängig vom jeweiligen Pump- bzw. Verbindungs-Mechanismus können die Kartusche **3** und das Dosier- und Analyse-Pump-Gerät **9** entsprechend jeweils eigener Anforderungen gestaltet sein. So kann das Pump-Gerät **9** statt einer aufwändig gesteuerten automatischen Apparatur auch eine handgesteuerte Vorrichtung sein, die beispielsweise der Entnahme von Blutproben im Rahmen medizinischer Untersuchungen direkt in die Kartusche **3** dient. Der Antrieb **13** wäre dann ein geeigneter manueller Antrieb und die Öffnung **4** wäre mit einer sterilen intravenösen Nadel versehen. Wenn statt Blutproben z.B. Gewässerproben für umwelttechnische oder chemische Untersuchungen genommen werden sollen, könnte eine solche Apparatur verwendet werden, die dann eine Düse anstelle einer Nadel an der Öffnung **4** der Kartusche aufweisen würde. In einer industriellen Großserien-Anwendung könnte die selbsttätig herstellbare und wieder lösbare Verbindung zwischen Kartusche **3** und Pump-Gerät **9** genutzt werden, um eine Vielzahl von Kartuschen **3** in schneller Abfolge durch das Pump-Gerät **9** befüllen oder entleeren zu lassen. Je nach Anwendung können die Kartuschen **3** mechanisch stabil, gegen Erschütterungen gedämpft, kühlbar, heizbar, durch ihre Form gut transportierbar oder in eine Großserien-Anlage integrierbar gestaltet sein. Außerdem können die Öffnung **4** verschließbar und der Kolben **5** versiegelbar sein, um unbeabsichtigtes Entweichen von Flüssigkeit **1** zu verhindern.

## Patentansprüche

1. Kartusche (3) für einen flüssigen oder gasförmigen Stoff mit einem als Zylinder geformten Tank (2), der eine Öffnung (4) zum Aus- und Einlassen des flüssigen oder gasförmigen Stoffs aufweist, und mit einem Kolben (5), der in dem Tank (2) vor- und/oder zurück bewegbar ist, um den flüssigen oder gasförmigen Stoff durch die Öffnung (4) aus- und/oder einzupumpen,
**dadurch gekennzeichnet, dass** der Kolben (5) ein Verbindungs-Element (7) aufweist, das mit einem Antrieb (13) verbunden werden kann, um den Kolben (5) vor- und/oder zurückzubewegen, und dass das Verbindungs-Element (7) und der Antrieb (13) derart aneinander angepasst sind, dass die Verbindung mechanisch formschlüssig in Bezug auf Bewegungen des Kolbens (5) in Längsrichtung ist, in einem ersten Längs-Abschnitt (25) des Tanks (2) beim Bewegen des Kolbens (5) in Längsrichtung selbsttätig geschlossen und beim Bewegen in die entgegengesetzte Richtung selbsttätig wieder gelöst wird, und in einem zweiten Längs-Abschnitt (27) des Tanks (2) beim Bewegen des Kolbens (5) geschlossen bleibt.

2. Kartusche (3) nach Anspruch 1,
**dadurch gekennzeichnet, dass** das Verbindungs-Element (7) eine Verbindungs-Buchse (19) und der Antrieb einen Verbindungs-Stempel (15) aufweist, und dass der Verbindungs-Stempel (15) bei Bewegungen des Kolbens (5) in Längsrichtung formschlüssig in die Verbindungs-Buchse (19) eingreifen kann.

3. Kartusche (3) nach einem der vorhergehenden Ansprüche,
**dadurch gekennzeichnet, dass** das Verbindungs-Element (7) ein Rast-Element (21) aufweist, dass der Antrieb (13) eine Verjüngung (17) aufweist, und dass das Rast-Element (21) in die Verjüngung (17) eingreifen kann.

4. Kartusche (3) nach einem der vorhergehenden Ansprüche,
**dadurch gekennzeichnet, dass** der Tank (2) ein in Längsrichtung offenes Ende aufweist, durch das hindurch der Verbindungs-Stempel (15) vor- und/oder zurückbewegbar ist, und dass sich der Querschnitt des Tanks (2) in dem ersten Längs-Abschnitt (25) zu diesem Ende hin kontinuierlich aufweitet.

5. Kartusche nach Anspruch 3 und 4,
**dadurch gekennzeichnet, dass** das Rast-Element (21) mindestens teilweise in dem ersten Längs-Abschnitt (25) liegt, falls die formschlüssige Verbindung zwischen Verbindungs-Element (7) und Antrieb (13) nicht hergestellt ist, und dass das Rast-Element (21), sobald das Verbindungs-Element (7) durch den Antrieb (13) in Längsrichtung bewegt wird, durch die kontinuierliche Verringerung des Querschnitts des Tanks (2) in Richtung der Verjüngung (17) gedrückt und mit dieser in Eingriff gebracht wird.

6. Kartusche (3) nach Anspruch 3,
**dadurch gekennzeichnet, dass** das Rast-Element (21) eine elastisch in eine Richtung bewegbare Raste (23) aufweist, die bei Bewegung des Antriebs (13) in Längsrichtung an einem ersten Punkt der Bewegung mit dem Antrieb (13) in Berührung tritt, die dann bei der weiteren Bewegung von diesem elastisch weggedrückt wird, und die erst an einem zweiten Punkt der Bewegung in die Verjüngung (17) eingreift, und dass die Raste (23) bei Bewegung des Antriebs (13) in die entgegengesetzte Richtung bis zum Erreichen des ersten Punktes starr in der Verjüngung (17) verbleibt.

7. Kartusche (3) nach einem der vorhergehenden Ansprüche,
**dadurch gekennzeichnet, dass** die Kartusche (3) zur Handhabung einer medizinisch zu untersuchenden Flüssigkeit (1) geeignet ist.

8. System (3,9) zur Handhabung eines flüssigen oder gasförmigen Stoffs mit einer Kartusche (3) gemäß Anspruch 1 und mit einem Pump-Gerät (9), das einen Antrieb (13) aufweist, durch den der Kolben (5) der Kartusche vor- und/oder zurückbewegt werden kann,
**dadurch gekennzeichnet, dass** der Kolben (5) ein Verbindungs-Element (7) aufweist, das mit dem Antrieb (13) verbunden werden kann, um den Kolben (5) vor- und/oder zurückzubewegen, und dass das Verbindungs-Element (7) und der Antrieb (13) derart aneinander angepasst sind, dass die Verbindung mechanisch formschlüssig in Bezug auf Bewegungen des Kolbens (5) in Längsrichtung ist, in einem ersten Längs-Abschnitt (25) des Tanks (2) beim Bewegen des Kolbens (5) in Längsrichtung selbsttätig geschlossen und beim Bewegen in die entgegengesetzte Richtung selbsttätig wieder gelöst wird, und in einem zweiten Längs-Abschnitt (27) des Tanks (2) beim Bewegen des Kolbens (5) geschlossen bleibt.

9. System (3,9) nach Anspruch 8,
**dadurch gekennzeichnet, dass** die Kartusche (3) derart angepasst ist, dass sie zur Handhabung einer medizinisch zu untersuchenden Flüssigkeit (1) geeignet ist.

10. System (3,9) nach Anspruch 8 oder 9,
**dadurch gekennzeichnet, dass** das Pump-Gerät (9) derart angepasst ist, dass es zur Durchführung einer medizinischen Untersuchung an einer Flüssigkeit (1) geeignet ist.

## Claims

1. Cartridge (3) for a liquid or gaseous substance with a tank (2) in the form of a cylinder having an opening (4) to discharge and admit the liquid or gaseous substance and with a piston (5) which can be moved forwards and/or back in the tank (2) to pump the liquid or gaseous substance out and/or in through the opening (4),
**characterised in that** the piston (5) has a connection element (7), which can be connected to an actuator (13) to move the piston (5) forwards and/or back and that the connection element (7) and actuator (13) are tailored to one another in such a manner that the connection has a mechanically positive fit in the longitudinal direction in respect of the movement of the piston (5), is automatically closed in a first longitudinal section (25) of the tank (2) during movement of the piston (5) in the longitudinal direction and is automatically released again during movement in the opposite direction and remains closed in a second longitudinal section (27) of the tank (2) during movement of the piston (5).

2. Cartridge (3) according to claim 1,
**characterised in that** the connection element (7) has a connection bush (19) and the actuator has a connection plunger (15) and the connection plunger (15) can engage with a positive fit in the connection bush (19) during movement of the piston (5) in the longitudinal direction.

3. Cartridge (3) according to one of the preceding claims,
**characterised in that** the connection element (7) has a latching element (21), the actuator (13) has a taper (17) and the latching element (21) can engage in the taper (17).

4. Cartridge (3) according to one of the preceding claims,
**characterised in that** the tank (2) has an open end in the longitudinal direction, through which the connection plunger (15) can be moved forwards and/or back and the cross-section of the tank (2) in the first longitudinal section (25) widens continuously towards this end.

5. Cartridge according to claim 3 and 4,
**characterised in that** the latching element (21) is located at least partially in the first longitudinal section (25), if the positive-fit connection is not established between connection element (7) and actuator (13), and the latching element (21) is pressed by the continuous reduction in the cross-section of the tank (2) towards the taper (17) and made to engage with it, as soon as the connection element (7) is moved by the actuator (13) in the longitudinal direction.

6. Cartridge (3) according to claim 3,
**characterised in that** the latching element (21) has a latch (23) that can be moved in an elastic manner in one direction, said latch (23) coming into contact with the actuator (13) at a first point of the movement during movement of the actuator (13) in the longitudinal direction and being pushed away from it in an elastic manner during further movement and only engaging in the taper (17) at a second point of the movement and that during movement of the actuator (13) in the opposite direction the latch (23) remains rigid in the taper (17) until the first point is reached.

7. Cartridge (3) according to one of the preceding claims,
**characterised in that** the cartridge (3) is suitable for handling a liquid (1) to be examined for medical purposes.

8. System (3, 9) for handling a liquid or gaseous substance with a cartridge (3) according to claim 1 and with a pump device (9), which has an actuator (13), which can be used to move the piston (5) of the cartridge forwards and/or back,
**characterised in that** the piston (5) has a connection element (7), which can be connected to the actuator (13) to move the piston (5) forwards and/or back, and that the connection element (7) and the actuator (13) are tailored to one another in such a manner that the connection has a mechanically positive fit in respect of movement of the piston (5) in the longitudinal direction, is automatically closed in a first longitudinal section (25) of the tank (2) during movement of the piston (5) in the longitudinal direction and is automatically released again during movement in the opposite direction and remains closed in a second longitudinal section (27) of the tank (2) during movement of the piston (5).

9. System (3, 9) according to claim 8,
**characterised in that** the cartridge (3) is tailored in such a manner that it is suitable for handling a liquid (1) to be examined for medical purposes.

10. System (3, 9) according to claim 8 or 9,
**characterised in that** the pump device (9) is tailored in such a manner that it is suitable for performing a medical examination on a liquid (1).

## Revendications

1. Cartouche (3) pour une substance liquide ou gazeuse comprenant un réservoir (2) en forme de cylindre qui comporte un orifice (4) d'admission et d'évacuation de la substance liquide ou gazeuse et avec un piston (5) qui peut être déplacé en avant et en arrière dans le réservoir pour introduire et/ou extraire par pompage la substance liquide ou gazeuse par l'orifice (4), **caractérisée en ce que** le piston (5) comporte un élément de liaison (7) qui peut être relié à un entraînement (13) pour déplacer le piston en avant et/ou en arrière et **en ce que** l'élément de liaison (7) et l'entraînement (13) sont adaptés l'un à l'autre de manière telle que la liaison est une liaison par complémentarité mécanique de forme par rapport à des mouvements du piston (5) dans le sens longitudinal, se ferme automatiquement dans une première partie de la longueur (25) du réservoir (2) lors du mouvement du piston (5) dans le sens longitudinal et se défait de nouveau lors du mouvement dans le sens inverse et, dans une deuxième partie (27) de la longueur du réservoir (2), reste fermée lors du mouvement du piston (5).

2. Cartouche (3) selon la revendication 1, **caractérisée en ce que** l'élément de liaison (7) comporte un élément femelle de liaison (19) et l'entraînement comporte un élément mâle de liaison (15) et **en ce que** l'élément mâle de liaison (15), lors de mouvements du piston (5) dans le sens longitudinal, peut s'engager avec complémentarité de forme dans l'élément femelle de liaison (19).

3. Cartouche (3) selon l'une des revendications précédentes, **caractérisée en ce que** l'élément de liaison (7) comporte un élément d'encliquetage (21), **en ce que** l'entraînement (13) comporte un amincissement (17) et **en ce que** l'élément d'encliquetage (21) peut s'engager dans l'amincissement (17).

4. Cartouche (3) selon l'une des revendications précédentes, **caractérisée en ce que** le réservoir (2) comporte une extrémité ouverte dans le sens longitudinal à travers de laquelle l'élément mâle de liaison (15) peut se déplacer en avant et en arrière et **en ce que** la section du réservoir (2), dans la première partie de la longueur (25), s'élargit continuellement vers cette extrémité.

5. Cartouche selon la revendication 3 et 4, **caractérisée en ce que** l'élément d'encliquetage (21) se trouve au moins en partie dans la première partie de la longueur (25) si la liaison par complémentarité de forme entre l'élément de liaison (7) et l'entraînement (13) n'est pas établie et **en ce que** l'élément d'encliquetage (21), dès que l'élément de liaison (7) est déplacé dans le sens longitudinal du fait de l'entraînement (13), est pressé, par la réduction continue de la section du réservoir (2), en direction de l'amincissement (17) et est mis en prise avec celui-ci.

6. Cartouche (3) selon la revendication 3, **caractérisée en ce que** l'élément d'encliquetage (21) comporte un cran (23) élastiquement mobile dans une direction, lequel, lors du mouvement de l'entraînement (13) dans le sens longitudinal, entre en contact avec l'entraînement (13) à un premier point du déplacement, lequel cran est alors repoussé élastiquement de celui-ci lors de la suite de déplacement et ne s'engage dans l'amincissement (17) qu'à un deuxième point du déplacement, et **en ce que** le cran (23), lors du mouvement de l'entraînement (13) dans le sens inverse, reste rigide dans l'amincissement (17) jusqu'à ce que le premier point soit atteint.

7. Cartouche (3) selon l'une des revendications précédentes, **caractérisée en ce que** la cartouche (3) convient pour la manipulation d'un liquide (1) à soumettre à une analyse médicale.

8. Système (3, 9) pour manipuler une substance liquide ou gazeuse avec une cartouche (3) selon la revendication 1 et avec un appareil à pompage (9) qui comporte un entraînement (13) qui permet de déplacer en avant et en arrière le piston (5) de la cartouche, **caractérisé en ce que** le piston (5) comporte un élément de liaison (7) qui peut être relié à l'entraînement (13) pour déplacer le piston (5) en avant et/ou en arrière et **en ce que** l'élément de liaison (7) et l'entraînement (13) sont adaptés l'un à l'autre de manière telle que la liaison est une liaison par complémentarité mécanique de forme par rapport à des mouvements du piston (5) dans le sens longitudinal, se ferme automatiquement dans une première partie de la longueur (25) du réservoir (2) lors du mouvement du piston (5) dans le sens longitudinal et se défait de nouveau automatiquement lors du mouvement dans le sens inverse, et dans une deuxième partie (27) de la longueur du réservoir (2), reste fermée lors du mouvement du piston (5).

9. Système (3, 9) selon la revendication 8, **caractérisé en ce que** la cartouche (3) est adaptée de manière à convenir pour la manipulation d'un liquide (1) à soumettre à une analyse médicale.

10. Système (3, 9) selon la revendication 8 ou 9, **caractérisé en ce que** l'appareil à pompage (9) est adapté de manière à convenir pour effectuer une analyse médicale d'un liquide (1).
